# EUROPÄISCHE PATENTSCHRIFT

(11) **EP 2 046 906 B1**
(45) Veröffentlichungstag und Bekanntmachung des Hinweises auf die Patenterteilung: **19.10.2016**
(21) Anmeldenummer: 07765383.0
(22) Anmeldetag: 13.06.2007
(51) Int. Cl.: C09D 201/00, C08G 64/14, C09D 169/00

(54) **WASSERBASISLACKE MIT HOCHFUNKTIONELLEN, HOCH- ODER HYPERVERZWEIGTEN POLYCARBONATEN**
WATER-BASED LACQUERS COMPRISING HIGHLY FUNCTIONAL, HIGHLY BRANCHED OR HYPERBRANCHED POLYCARBONATES
LAQUES À BASE AQUEUSE RENFERMANT DES POLYCARBONATES HAUTEMENT OU HYPER-RAMIFIÉS HAUTEMENT FONCTIONNELS

(30) Priorität: 20.07.2006 EP 06117539
(43) Veröffentlichungstag der Anmeldung: 15.04.2009
(73) Patentinhaber: BASF SE, 67056 Ludwigshafen am Rhein (DE); BASF Coatings GmbH, 48165 Münster (DE)
(72) Erfinder: STEINMETZ, Bernhard, 97535 Rütschenhausen (DE); BRUCHMANN, Bernd, 67251 Freinsheim (DE); KÜDDE, Anke, 97261 Güntersleben (DE); SCHNEIDER, Claudia, 97450 Arnstein-Müdesheim (DE); NENNER, Udo, 97877 Wertheim (DE)
(74) Vertreter: BASF IP Association
(86) Internationale Anmeldenummer: PCT/EP2007/055796
(87) Internationale Veröffentlichungsnummer: WO 2008/009516

(56) Entgegenhaltungen:
- WO-A-2005/026234
- WO-A-2006/089940
- WO-A-2007/134736
- WO-A-2007/135032

## Beschreibung

Die vorliegende Erfindung betrifft die Verwendung von hochfunktionellen, hoch- oder hyperverzweigten Polycarbonaten auf Basis von Dialkyl- oder Diarylcarbonaten oder Phosgen, Diphosgen oder Triphosgen und aliphatischen, aliphatisch/aromatischen oder aromatischen Di- oder Polyolen in Wasserbasislacken.

In EP 01124907 B1 werden Polyethylen- und Polypropylenoxide zur Verbesserung der Klarlackbenetzung auf Basislack beschrieben.
In DE 19904330 A1 wird die Verwendung von Polypropylenglykol mit einem zahlenmittleren Molekulargewischt von etwa 900 genannt. Es werden positive Applikationseigenschaften bei Verwendung dieses Additivs beschrieben.
In DE 3707388 A1 wird ein Polypropylenoxid der mittleren Molmasse 900 als Schutzkolloid für Schichtsilikate, das als Rheologieadditiv in Wasserbasislacken Verwendung findet, beschrieben.
Aus der WO 2007/135032 ist die Verwendung von hyperverzweigten Polycarbonaten in Pigmentzubereitungen, die wasserbasierend sein können und deren Verwendung in Lacken bekannt, wobei die Lacke eingefärbt sein können.
Polycarbonate werden üblicherweise aus der Reaktion von Alkoholen oder Phenolen mit Phosgen oder aus der Umesterung von Alkoholen oder Phenolen mit Dialkyl- oder Diarylcarbonaten erhalten. Technisch bedeutend sind aromatische Polycarbonate, die zum Beispiel aus Bisphenolen hergestellt werden; aliphatische Polycarbonate spielen vom Marktvolumen her gesehen bisher eine untergeordnete Rolle. Siehe dazu auch Becker/Braun, Kunststoff-Handbuch Bd. 3/1, Polycarbonate, Polyacetale, Polyester, Celluloseester, Carl-Hanser-Verlag, München 1992, Seiten 118 - 119, und "Ullmann's Encyclopedia of Industrial Chemistry", 6th Edition, 2000 Electronic Release, Verlag Wiley-VCH.

Die in der Literatur beschriebenen aromatischen oder aliphatischen Polycarbonate sind in der Regel linear oder mit einem lediglich geringen Verzweigungsgrad aufgebaut.

Definiert aufgebaute, hochfunktionelle Polycarbonate sind erst seit kurzer Zeit bekannt.

WO 2005/026234 beschreibt die Herstellung von hyperverzweigten Polycarbonaten sowie deren Verwendung in Lacken allgemein, sowie insbesondere in Druckfarben.

Wasserbasislacke werden jedoch nicht erwähnt.

In der Internationalen Patentanmeldung WO 2006/089940 werden hyperverzweigte, hoch- oder hyperverzweigte Polycarbonate beschrieben sowie allgemein deren Verwendung in Pulverlacken.

Wasserbasislacke werden dort jedoch nicht beschrieben.

In der unveröffentlichten Europäischen Patentanmeldung mit dem Aktenzeichen 06114213.9 und dem Einreichedatum 19.5.2006 werden Pulverlacke mit hyperverzweigten, hoch- oder hyperverzweigten Polycarbonaten beschrieben.

Wasserbasislacke werden dort jedoch nicht beschrieben.

S. P. Rannard und N. J. Davis, J. Am. Chem. Soc. 2000, 122, 11729, beschreiben die Herstellung von perfekt verzweigten dendrimeren Polycarbonaten durch Reaktion von Carbonylbisimidazol als Phosgen-analoger Verbindung mit Bis-hydroxyethylamino-2-propanol.

Synthesen zu perfekten Dendrimeren sind vielstufig, daher kostenintensiv und für die Übertragung in einen industriellen Maßstab somit ungeeignet.

D.H. Bolton und K. L. Wooley, Macromolecules 1997, 30, 1890, beschreiben die Herstellung von hochmolekularen, sehr starren hyperverzweigten aromatischen Polycarbonaten durch Umsetzung von 1,1,1-Tris(4'-hydroxyphenyl)ethan mit Carbonylbisimidazol.

Hyperverzweigte Polycarbonate lassen sich auch gemäß WO 98/50453 herstellen. Nach dem dort beschriebenen Verfahren werden Triole wiederum mit Carbonylbisimidazol umgesetzt. Es entstehen zunächst Imidazolide, die dann intermolekular zu den Polycarbonaten weiterreagieren. Nach der genannten Methode fallen die Polycarbonate als farblose oder blassgelbe gummiartige Produkte an.

Scheel und Mitarbeiter, Macromol. Symp. 2004, 120, 101, beschreiben die Herstellung von Polycarbonaten auf Basis von Triethanolamin und Carbonylbisimidazol, die jedoch zu thermolabilen Produkten führt.

Die genannten Synthesen zu hoch- oder hyperverzweigten Polycarbonaten weisen folgende Nachteile auf:
a) die hyperverzweigten Produkte sind entweder hochschmelzend, gummiartig oder thermisch labil, dadurch wird eine spätere Verarbeitbarkeit deutlich eingeschränkt.
b) während der Reaktion freiwerdendes Imidazol muß aufwändig aus dem Reaktionsgemisch entfernt werden.
c) die Reaktionsprodukte enthalten immer terminale Imidazolid-Gruppen. Diese Gruppen sind labil und müssen über einen Folgeschritt z.B. in Hydroxylgruppen umgewandelt werden.
d) Carbonyldiimidazol ist eine vergleichsweise teure Chemikalie, die die Einsatzstoffkosten stark erhöht.

Der vorliegenden Erfindung lag die Aufgabe zugrunde, Wasserbasislacke herzustellen, die verbesserte Eigenschaften und/oder eine verbesserte Optik aufweisen. Insbesondere galt es, die Benetzungseigenschaften zu verbessern.

Die Aufgabe konnte gelöst werden, durch die Verwendung von hochfunktionellen, hoch- oder hyperverzweigten Polycarbonaten als Additiv in Mehrschichtlackierungen, aufgebaut aus einem Wasserbasislack und einem Klarlack, worin der Wasserbasislack die hochfunktionellen, hoch- oder hyperverzweigten Polycarbonate enthält.

Einen Gegenstand der Erfindung bildet daher die Verwendung von hochfunktionellen, hoch- oder hyperverzweigten Polycarbonaten zur Verringerung der Benetzungsgrenze bei der Mehrschichtlackierung, bevorzugt Zweischichtlackierung mit wäßrigem Basislack und Klarlack.

Bei der Verwendung werden die hochfunktionellen, hoch- oder hyperverzweigten Polycarbonaten dem wäßrigen Basislack vor seiner Applikation zugesetzt, bevorzugt in einem Mengenanteil von 0,1 bis 15 Gew%, bezogen auf seinen Festkörpergehalt.

Einen weiteren Gegenstand der Erfindung bildet die Verwendung für eine wäßrige Basislackzusammensetzung, enthaltend jeweils ein oder mehrere Bindemittel und gegebenenfalls Pigmente sowie gegebenenfalls Füllstoffe, Vernetzer, organische Lösemittel und/oder lackübliche Additive, die zusätzlich ein oder mehrere hochfunktionelle, hoch- oder hyperverzweigte Polycarbonate in einem Mengenanteil von 0,1 bis 15 Gew.- %, bezogen auf ihren Festkörpergehalt, enthält.

Die dazu eingesetzten hochfunktionellen, hoch- oder hyperverzweigten Polycarbonate sind bei Raumtemperatur (23 °C) flüssig oder fest, bevorzugt flüssig weisen in der Regel eine Glasübergangstemperatur von -70 bis 50 °C, bevorzugt von -70 bis 20 °C und besonders bevorzugt von -50 bis +10 °C auf.

Die Glasübergangstemperatur T_{g} wird mit der DSC-Methode (Differential Scanning Calorimetry) gemäß ASTM 3418/82 bestimmt, die Aufheizrate beträgt bevorzugt 10 °C/min.

Die OH-Zahl gemäß DIN 53240, Teil 2 der hyperverzweigten Polycarbonate beträgt meist 100 mg KOH/g oder mehr, bevorzugt 150 mg KOH/g oder mehr.

Die Viskosität gemäß ISO 3219 der Polycarbonate in Schmelze bei 175°C liegt zwischen 0 und 20000 mPas, bevorzugt 0 - 15000 mPas.

Das gewichtsmittlere Molgewicht M_{w} liegt zumeist zwischen 1.000 und 150.000, bevorzugt von 2000 bis 120.000 g/mol, das zahlenmittlere Molgewicht Mₙ zwischen 500 und 50.000, bevorzugt zwischen 500 und 40.000 g/mol.

Die Polycarbonate zeigen in den erfindungsgemäßen Wasserbasislacken, insbesondere als Hilfsmittel zur Verbesserung der Benetzungseigenschaften eine vorteilhafte Wirkung.

Unter hyperverzweigten Polycarbonaten werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen, verzweigten Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hoch-" und "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, geteilt durch die Summe aus der mittleren Anzahl der dendritischen Verknüpfungen, der mittleren Anzahl der linearen Verknüpfungen und der mittleren Anzahl der Endgruppen, multipliziert mit 100, 10 bis 99,9 %, bevorzugt 20 bis 99 %, besonders bevorzugt 20 - 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Es stellt wichtiges Merkmal der Polycarbonate dar, daß sie unvernetzt sind. "Unvernetzt" im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also ausgewählt aus der Gruppe bestehend aus Tetrahydrofuran, Dimethylacetamid und Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Bevorzugt werden die hochfunktionellen, hoch- oder hyperverzweigten, unvernetzten Polycarbonaten durch ein Verfahren erhalten, umfassend die Schritte:
a) Herstellung eines oder mehrerer Kondensationsprodukte (K) entweder durch
   a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B1), welcher mindestens 3 OH-Gruppen aufweist, unter Eliminierung von Alkoholen ROH, wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes, bevorzugt eines fünf- bis sechsgliedrigen Ringes miteinander verbunden sein können, und n eine ganze Zahl von 1 bis 5 darstellt
      oder
   a2) Umsetzung von Phosgen, Diphosgen oder Triphosgen mit dem besagten aliphatischen, aliphatisch/aromatischen oder aromatischen Alkohol (B1) unter Freisetzung von Chlorwasserstoff,
      und
b) intermolekulare Umsetzung der Kondensationsprodukte (K) zu einem hochfunktionellen, hoch- oder hyperverzweigten Polycarbonat,
wobei das Mengenverhältnis der OH-Gruppen zu den Phosgenen oder den Carbonaten im Reaktionsgemisch so gewählt wird, dass die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen.

Zum Verfahren ist im Einzelnen das Folgende auszuführen:

Als Ausgangsmaterial kann Phosgen, Diphosgen oder Triphosgen, unter diesen bevorzugt Phosgen, eingesetzt werden, vorzugsweise werden jedoch organische Carbonate (A) verwendet.

Bei den Resten R der als Ausgangsmaterial eingesetzten organischen Carbonate (A) der allgemeinen Formel RO[(CO)O]ₙR handelt es sich jeweils unabhängig voneinander um einen geradkettigen oder verzweigten aliphatischen, aromatisch/aliphatischen (araliphatischen) oder aromatischen Kohlenwasserstoffrest mit 1 bis 20 C-Atomen. Die beiden Reste R können auch unter Bildung eines Ringes miteinander verbunden sein. Die beiden Reste R können gleich oder unterschiedlich sein, bevorzugt sind sie gleich. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

R steht dabei für einen geradkettigen oder verzweigten, bevorzugt geradkettigen, (cyclo)aliphatischen, aromatisch/aliphatischen oder aromatischen, bevorzugt (cyclo)aliphatischen oder aromatischen, besonders bevorzugt aliphatischen Kohlenwasserstoffrest mit 1 bis 20 C-Atomen, bevorzugt 1 bis 12, besonders bevorzugt 1 bis 6 und ganz besonders bevorzugt 1 bis 4 Kohlenstoffatomen.

Beispiele dafür sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, Phenyl, o- oder p-Tolyl oder Naphthyl. Bevorzugt sind Methyl, Ethyl, n-Butyl und Phenyl.

Die Reste R können dabei gleich oder verschieden sind, bevorzugt sind sie gleich.

Die Reste R können auch unter Bildung eines Ringes miteinander verbunden sein. Beispiele für derartige zweibindige Reste R sind 1,2-Ethylen, 1,2-Propylen und 1,3-Propylen.

Generell handelt es sich bei n um eine ganze Zahl von 1 bis 5, bevorzugt von 1 bis 3, besonders bevorzugt von 1 bis 2.

Bei den Carbonaten kann es sich bevorzugt um einfache Carbonate der allgemeinen Formel RO(CO)OR handeln, d.h. in diesem Falle steht n für 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Es spielt erfindungsgemäß keine signifikante Rolle, auf welche Weise das Carbonat hergestellt worden ist.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Di-n-propylcarbonat, Di-n-butylcarbonat, Diisobutylcarbonat, Dipentylcarbonat, Dihexylcarbonat, Dicyclohexylcarbonat, Diheptylcarbonat, Dioctylcarbonat, Didecylcarbonat oder Didodecylcarbonat.

Beispiele für Carbonate, bei denen n größer als 1 ist, umfassen Dialkyldicarbonate, wie Di(tert-butyl)dicarbonat oder Dialkyltricarbonate wie Di(tert-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Di-n-propylcarbonat, Di-n-butylcarbonat oder Diisobutylcarbonat. Ein bevorzugtes aromatisches Carbonat ist Diphenylcarbonat.

Die organischen Carbonate werden mit mindestens einem aliphatischen oder aromatischen Alkohol (B1), welcher mindestens 3 OH-Gruppen aufweist oder Gemischen zweier oder mehrerer verschiedener Alkohole umgesetzt.

Der Alkohol (B1) kann verzweigt oder unverzweigt, substituiert oder unsubstituiert sein und 3 bis 26 Kohlenstoffatome aufweisen. Bevorzugt handelt es sich um einen (cyclo)aliphatischen, besonders bevorzugt um einen aliphatischen Alkohol.

Beispiele für Verbindungen mit mindestens drei OH-Gruppen umfassen Glycerin, Trimethylolmethan, Trimethylolethan, Trimethylolpropan, Trimethylolbutan, 1,2,4-Butantriol, Tris(hydroxy-methyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid oder Butylenoxid oder deren Gemischen, oder Polyesterole.

Die genannten mindestens drei OH-Gruppen aufweisenden Alkohole können gegebenenfalls auch alkoxyliert sein, d.h. mit ein bis 30, bevorzugt ein bis 20, besonders bevorzugt ein bis 10 und ganz besonders bevorzugt ein bis fünf Molekülen Ethylenoxid und/oder Propylenoxid und/oder iso-Butylenoxid pro Hydroxygruppe umgesetzt sein.

Dabei sind Glycerin, Trimethylolethan, Trimethylolpropan, 1,2,4-Butantriol, Pentaerythrit, sowie deren Polyetherole auf Basis von Ethylenoxid und/oder Propylenoxid besonders bevorzugt.

Diese mehrfunktionellen Alkohole können auch in Mischung mit difunktionellen Alkoholen (B2) eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, 1,2- oder 1,3-Cyclopentandiol, 1,2-, 1,3- oder 1,4-Cyclohexandiol, 1,1-, 1,2-, 1,3- oder 1,4-Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxydiphenyl, Bis-(4-Hydroxyphenyl)sulfid, Bis(4-Hydroxyphenyl)sulfon, Bis(hydroxymethyl)benzol, Bis(Hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran mit einem Molgewicht von 162 bis 2000, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen (B2) zu den mindestens trifunktionellen Alkoholen (B1) vom Fachmann je nach den gewünschten Eigenschaften des Polycarbonates festgelegt. Im Regelfalle beträgt die Menge des oder der Alkohole (B2) 0 bis 39,9 mol % bezüglich der Gesamtmenge aller Alkohole (B1) und (B2) zusammen. Bevorzugt beträgt die Menge 0 bis 35 mol %, besonders bevorzugt 0 bis 25 mol % und ganz besonders bevorzugt 0 bis 10 mol %.

Die Alkohole (B1) und (B2) werden hier zusammen als (B) bezeichnet.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum hochfunktionellen hochverzweigten Polycarbonat erfolgt unter Eliminierung des monofunktionellen Alkohols oder Phenols aus dem Carbonat-Molekül.

Die nach dem beschriebenen Verfahren gebildeten hochfunktionellen hochverzweigten Polycarbonate sind nach der Reaktion, also ohne weitere Modifikation, mit Hydroxylgruppen und mit Carbonatgruppen beziehungsweise Carbamoylchloridgruppen terminiert. Sie lösen sich gut in verschiedenen Lösemitteln.

Beispiele für derartige Lösungsmittel sind aromatische und/oder (cyclo)aliphatische Kohlenwasserstoffe und deren Gemische, halogenierte Kohlenwasserstoffe, Ketone, Ester und Ether.

Bevorzugt sind aromatische Kohlenwasserstoffe, (cyclo)aliphatische Kohlenwasserstoffe, Alkansäurealkylester, Ketone, alkoxylierte Alkansäurealkylester und deren Gemische.

Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, 2-Butanon, 2-Pentanon, 3-Pentanon, Hexanon, iso Butyl methyl keton, Heptanon, Cyclopentanon, Cyclohexanon oder Cycloheptanon.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat, 2-Butanon, iso Butyl methyl keton sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Lösungsmittel sind Butylacetat, Methoxypropylacetat, iso Butyl methyl keton, 2-Butanon, Solvesso®-Marken und Xylol.

Weiterhin geeignet können für die Carbonate zum Beispiel Wasser, Alkohole, wie Methanol, Ethanol, Butanol, Alkohol/Wasser-Mischungen, Aceton, 2-Butanon, Dimethylformamid, Dimethylacetamid, N-Methylpyrrolidon, N-Ethylpyrrolidon, Ethylencarbonat oder Propylencarbonat sein.

Besonders bevorzugt sind die Polycarbonate wasserlöslich oder wasserdispergierbar.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen beziehungsweise Carbamoylchloridgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat (A) so einzustellen, dass das resultierende einfachste Kondensationsprodukt (im Weiteren Kondensationsprodukt (K) genannt) im Mittel entweder eine Carbonat- oder Carbamoylchloridgruppe und mehr als eine OH-Gruppe oder eine OH-Gruppe und mehr als eine Carbonat- oder Carbamoylchloridgruppe, bevorzugt im Mittel entweder eine Carbonat- oder Carbamoylchloridgruppe und mindestens zwei OH-Gruppen oder eine OH-Gruppe und mindestens zwei Carbonat- oder Carbamoylchloridgruppen enthält.

Es kann ferner sinnvoll sein, zur Feineinstellung der Eigenschaften des Polycarbonates mindestens eine zweiwertige carbonylreaktive Verbindung (A1) einzusetzen. Darunter werden solche Verbindungen verstanden, die zwei Carbonat- und/oder Carboxylgruppen aufweisen.

Carboxylgruppen können dabei Carbonsäuren, Carbonsäurechloride, Carbonsäureanhydride oder Carbonsäureester sein, bevorzugt Carbonsäureanhydride oder Carbonsäureester und besonders bevorzugt Carbonsäureester.

Falls solche zweiwertigen Verbindungen (A1) eingesetzt werden, so wird das Verhältnis von (A1) zu den Carbonaten bzw. Phosgenen (A) vom Fachmann je nach den gewünschten Eigenschaften des Polycarbonates festgelegt. Im Regelfalle beträgt die Menge des oder der zweiwertigen Verbindung (A1) 0 bis 40 mol % bezüglich der Gesamtmenge aller Carbonate/Phosgene (A) und Verbindungen (A1) zusammen. Bevorzugt beträgt die Menge 0 bis 35 mol %, besonders bevorzugt 0 bis 25 mol % und ganz besonders bevorzugt 0 bis 10 mol %.

Beispiele für Verbindungen (A1) sind Dicarbonate oder Dicarbamoylchloride von Diolen, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Diese können beispielsweise hergestellt werden, indem man diese Diole mit einem Überschuß an beispielsweise den oben aufgeführten Carbonaten RO(CO)OR oder Chlorkohlensäureestern umsetzt, so daß dieso erhaltenen Dicarbonate beidseitig mit Gruppen RO(CO)- substituiert sind. Eine weitere Möglichkeit ist die, die Diole zunächst mit Phosgen zu den korrespondierenden Chlorkohlensäureestern der Diole umzusetzen und anschließend mit Alkoholen umzusetzen.

Weitere Verbindungen (A1) sind Dicarbonsäuren, Ester von Dicarbonsäuren, bevorzugt die Methyl-, Ethyl-, iso-Propyl-, n-Propyl-, n-Butyl-, iso-Butyl-, sek-Butyl- oder tert-Butylester, besonders bevorzugt die Methyl-, Ethyl- oder n-Butylester.

Beispiele für derartige Dicarbonsäuren sind Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Azelainsäure, 1,4-Cyclohexandicarbon-säure oder Tetrahydrophthalsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, dimere Fettsäuren, deren Isomere und Hydrierungsprodukte.

Die einfachste Struktur des Kondensationsproduktes (K), dargestellt am Beispiel der Umsetzung eines Carbonats (A) mit einem Di- oder Polyalkohol (B) ergibt dabei die Anordnung XYₘ oder YₘX, wobei X eine Carbonat- oder Carbamoylgruppe, Y eine Hydroxyl-Gruppe und m in der Regel eine ganze Zahl größer 1 bis 6, vorzugsweise größer 1 bis 4, besonders bevorzugt größer 1 bis 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das molare Umsetzungsverhältnis bei 1:1, so resultiert im Mittel ein Molekül des Typs XY, veranschaulicht durch die allgemeine Formel (I).

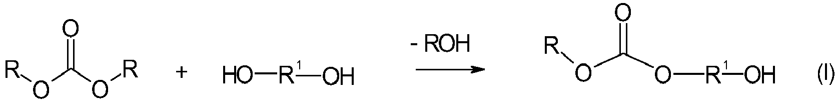

Bei der Herstellung des Kondensationsproduktes (K) aus einem Carbonat und einem dreiwertigen Alkohol bei einem molaren Umsetzungsverhältnis von 1 : 1 resultiert im Mittel ein Molekül des Typs XY₂, veranschaulicht durch die allgemeine Formel (II). Fokale Gruppe ist hier eine Carbonatgruppe.

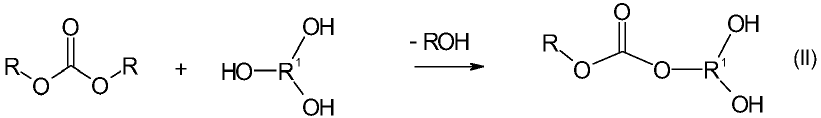

Bei der Herstellung des Kondensationsproduktes (K) aus einem Carbonat und einem vierwertigen Alkohol ebenfalls mit dem molaren Umsetzungsverhältnis 1 : 1 resultiert im Mittel ein Molekül des Typs XY₃, veranschaulicht durch die allgemeine Formel (III). Fokale Gruppe ist hier eine Carbonatgruppe.

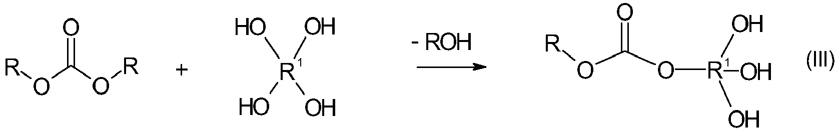

In den Formeln (I) bis (III) hat R die eingangs definierte Bedeutung und R¹ steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel (IV), erfolgen, wobei das Umsetzungsverhältnis bei molar 2:1 liegt. Hier resultiert im Mittel ein Molekül des Typs X₂Y, fokale Gruppe ist hier eine OH-Gruppe. In der Formel (IV) haben R und R¹ die gleiche Bedeutung wie oben in den Formeln (I) bis (III).

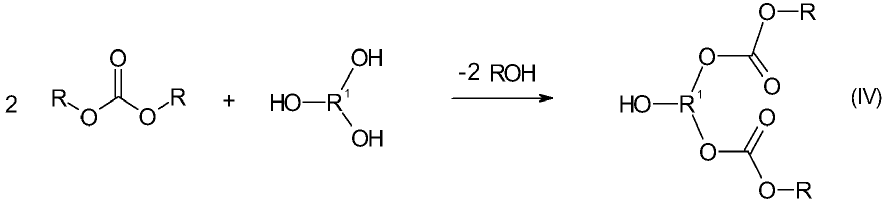

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel (V) veranschaulicht. Es resultiert wieder im Mittel ein Molekül des Typs XY₂, fokale Gruppe ist eine Carbonatgruppe.

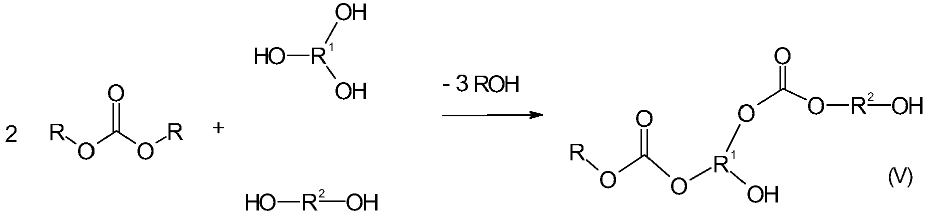

In Formel (V) bedeutet R² einen aliphatischen oder aromatischen Rest, R und R¹ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül XY₂. Setzt man die Ausgangsprodukte im Verhältnis 2:1 ein, wie in (IV) dargestellt, so erhält man ein Molekül X₂Y. Bei einem Verhältnis zwischen 1:1 und 2:1 erhält man eine Mischung von Molekülen XY₂ und X₂Y.

Typische Reaktionsbedingungen der Umsetzung von (A) mit (B) zum Kondensationsprodukt (K) sind im folgenden dargestellt:
Die Stöchiometrie der Komponenten (A) und (B) wird generell so gewählt, daß das resultierende Kondensationsprodukt (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweist. Dies wird im ersten Fall erreicht durch eine Stöchiometrie von 1 mol Carbonatgruppen : >2 mol OH-Gruppen, beispielsweise eine Stöchiometrie von 1 : 2,1 bis 8, bevorzugt 1 : 2,2 bis 6, besonders bevorzugt 1 : 2,5 bis 4 und ganz besonders bevorzugt 1 : 2,8 bis 3,5.

Im zweiten Fall wird dies erreicht durch eine Stöchiometrie von mehr als 1 mol Carbonatgruppen : <1 mol OH-Gruppen, beispielsweise eine Stöchiometrie von 1 : 0,1 bis 0,48, bevorzugt 1 : 0,15 bis 0,45, besonders bevorzugt 1 : 0,25 bis 0,4 und ganz besonders bevorzugt 1 : 0,28 bis 0,35.

Die Temperatur sollte ausreichend für die Umsetzung des Alkohols mit der entsprechenden Carbonylkomponente sein. In der Regel ist für die Umsetzung mit einem Phosgen eine Temperatur von -20 °C bis 120 °C, bevorzugt 0 bis 100 und besonders bevorzugt 20 bis 80 °C. Bei Einsatz eines Carbonats sollte die Temperatur 60 bis 180 °C, bevorzugt 80 bis 160 °C, besonders bevorzugt 100 bis 160 und ganz besonders bevorzugt 120 bis 140 °C betragen.

Als Lösungsmittel kommen die bereits oben angeführten Lösungsmittel in Frage. Es stellt eine bevorzugte Ausführungsform dar, die Reaktion ohne Lösungsmittel durchzuführen.

Die Reihenfolge der Zugabe der einzelnen Komponenten spielt zumeist eine untergeordnete Rolle. In der Regel ist es sinnvoll die Überschußkomponente der beiden Reaktionspartner vorzulegen und die Unterschußkomponente zuzugeben. Alternativ ist es ebenfalls möglich, die beiden Kompoenten vor Reaktionsbeginn miteinander zu vermischen und diese Gemisch anschließend auf die erforderliche Reaktionstemperatur aufzuheizen.

Die beispielhaft in den Formeln (I) bis (V) beschriebenen einfachen Kondensationsprodukte (K) reagieren bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 300 °C, bevorzugt 0 bis 250°C, besonders bevorzugt bei 60 bis 200°C und ganz besonders bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel die oben genannten und besonders bevorzugt Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Die Abtrennung des Alkohols oder Phenols kann auch durch Durchleiten eines unter den Reaktionsbedingungen im wesentlichen inerten Gasstromes (Strippen), wie z.B. Stickstoff, Wasserdampf, Kohlenstoffdioxid oder auch eines sauerstoffhaltigen Gases, wie z.B. Luft oder Magerluft, unterstützt werden.

Falls Abdestillieren vorgesehen ist, ist es regelmäßig empfehlenwert, solche Carbonate einzusetzen, welche bei der Umsetzung Alkohole oder Phenole ROH mit einem Siedepunkt von weniger als 140°C bei dem vorliegenden Druck freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum, beispielsweise über mindestens 6 Wochen, stabil, ohne Trübungen, Ausfällungen und/oder einen Viskositätsanstieg zu zeigen.

Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonat- oder Carbamoylchloridgruppe als fokale Gruppe und mehr als zwei OH-Gruppen oder aber eine OH-Gruppe als fokale Gruppe und mehr als zwei Carbonat- oder Carbamoylchloridgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel (II) durch dreifache intermolekulare Kondensation zu zwei verschiedenen Polykondensationsprodukten (P), die in den allgemeinen Formeln (VI) und (VII) wiedergegeben werden, reagieren.

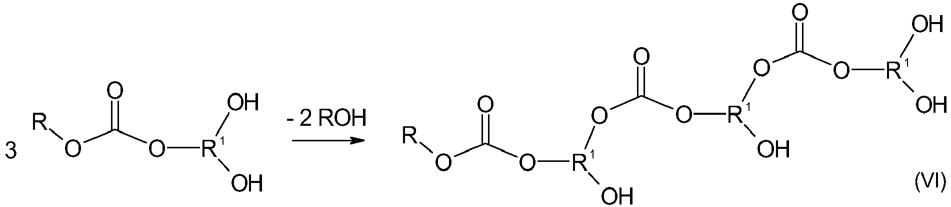

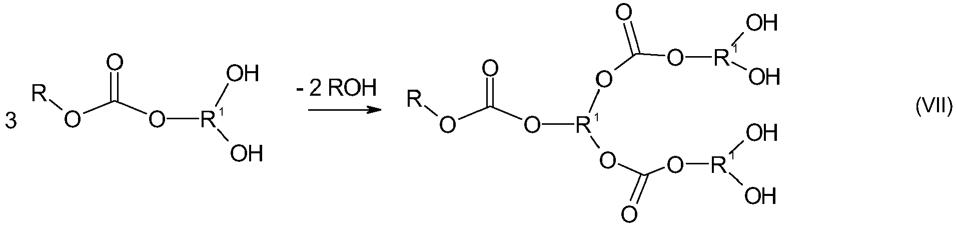

In Formel (VI) und (VII) sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist. Dies ist in der Regel unterhalb von 60 °C, bevorzugt unter 50 °C, besonders bevorzugt unterhalb von 40 °C und ganz besonders bevorzugt bei Raumtemperatur der Fall.

Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure.

Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muß.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden.

So kann bei einer Carbonatgruppe bzw. Carbamoylgruppe als fokaler Gruppe zum Beispiel ein Mono-, Di- oder Polyamin zugegeben werden.

Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der hochfunktionellen Polycarbonate erfolgt zumeist in einem Druckbereich von 0,1 hPa bis 2 MPa, bevorzugt bei 1 hPa bis 500 kPa, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die Produkte nach der Herstellung ohne weitere Reinigung weiterverarbeitet werden.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 100 °C, bevorzugt 20 bis 80 °C und besonders bevorzugt 30 bis 60 °C unterworfen werden.

Gegebenenfalls kann das Reaktionsgemisch auch zur Entfernung von eventuell vorhandenen Ausfällungen filtriert werden.

In einer weiteren bevorzugten Ausführungsform wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten, von den Carbonat- bzw. Carbamoylchlorid und Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylchloridgruppen weitere funktionelle Gruppen oder funktionelle Elemente, wie Mercaptogruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste tragen.

Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von Triethanolamin, Tripropanolamin, N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Zugabe von Dicarbonsäuren, Tricarbonsäuren, Dicarbonsäureestern, wie beispielsweise Terephthalsäuredimethylester oder Tricarbonsäureestern lassen sich Estergruppen erzeugen. Durch Reaktion mit langkettigen Alkanolen oder Alkandiolen lassen sich langkettige Alkylreste einbringen. Die Reaktion mit Alkyl- oder Aryldiisocyanaten generiert Alkyl-, Aryl- und Urethangruppen aufweisende Polycarbonate, die Zugabe von primären oder sekundären Aminen führt zur Einbringung von Urethan- oder Harnstoffgruppen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat- oder Carbamoylchlorid-Gruppen des Polycarbonates reagieren kann, umsetzt.

Hydroxylgruppen enthaltende hochfunktionelle, hoch- oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Dies kann beispielsweise zur Erhöhung der Wasserlöslichkeit oder zur Herbeifühung einer Wasseremulgierbarkeit sinnvoll sein. Dazu werden die Hydroxygruppen mit mindestens einem Alkylenoxid, beispielsweise Ethylenoxid, Propylenoxid, iso-Butylenoxid und/oder Styroloxid, bevorzugt Ethylenoxid und/oder Propylenoxid und besonders bevorzugt Ethylenoxid umgesetzt. Je Hydroxygruppe setzt man dafür von 1 bis 200, bevorzugt 2 bis 200, besonders bevorzugt 5 bis 100, ganz besonders bevorzugt 10 bis 100 und insbesondere 20 bis 50 Alkylenoxide ein.

Eine bevorzugte Ausführungsform der vorliegenden Erfindung stellt es dar, die Polycarbonate zumindest teilweise mit mindestens einem monofunktionellen Polyalkylenoxidpolyetheralkohol umsetzt. Dadurch wird eine verbesserte Wasseremulgierbarkeit bewirkt.

Monofunktionelle Polyalkylenoxidpolyetheralkohole sind Umsetzungsprodukte von geeigneten Startermolekülen mit Polyalkylenoxiden.

Geeignete Startermoleküle zur Herstellung einwertiger Polyalkylenoxidpolyetheralkohole sind Thiolverbindungen, Monohydroxyverbindungen der allgemeinen Formel

R⁵-O-H

oder sekundäre Monoamine der allgemeinen Formel

R⁶R⁷N-H,

in welchen
R⁵, R⁶ und R⁷ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R⁶ und R⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R⁵, R⁶ und R⁷ unabhängig voneinander C₁- bis C₄-Alkyl, d.h. Methyl, Ethyl, iso-Propyl, n-Propyl, n-Butyl, iso-Butyl, sek-Butyl oder tert-Butyl, besonders bevorzugt sind R⁵, R⁶ und R⁷ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1 H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Beispiele für die auf Aminen gestarteten Polyether sind die sogenannten Jeffamine® M-Serien, die methylgekappte Polyalkylenoxide mit einer Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül auf, besonders bevorzugt mindestens 7, ganz besonders bevorzugt mindestens 10 und insbesondere mindestens 15.

Die einwertigen Polyalkylenoxidpolyetheralkohole weisen im statistischen Mittel in der Regel bis zu 50 Alkylenoxideinheiten, bevorzugt Ethylenoxideinheiten, pro Molekül auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 500 und insbesondere 1000 ± 200 g/mol.

Bevorzugte Polyetheralkohole sind somit Verbindungen der Formel

R⁵-O-[-Xᵢ-]ₖ-H

worin
R⁵ die oben genannten Bedeutungen hat,
k für eine ganze Zahl von 5 bis 40, bevorzugt 7 bis 45 und besonders bevorzugt 10 bis 40 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Zur Durchführung der Umsetzung der Polycarbonate werden die Polycarbonate (K) und/oder (P) bei Temperaturen von 40 bis 180°C, vorzugsweise 50 bis 150°C, unter Einhaltung eines Carbonat- bzw. Carbamoylchlorid-/OH-Äquivalentverhältnisses von 1 : 1 bis 100 : 1, vorzugsweise von 1 : 1 bis 50 : 1, besonders bevorzugt 1,5 : 1 bis 20 : 1 miteinander umgesetzt.

Ein großer Vorteil des Verfahrens liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Die nach dem Verfahren gebildeten hochfunktionellen hochverzweigten Polycarbonate sind nach der Reaktion, also ohne weitere Modifikation, mit Hydroxylgruppen und/oder mit Carbonat- oder Carbamoylchloridgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Die hochfunktionellen, hoch- oder hyperverzweigten Polycarbonate werden in einem Mengenanteil von 0,1 bis 15 Gew%, bevorzugt 0,2 bis 10 Gew%, besonders bevorzugt 0,3 bis 8 Gew%, ganz besonders bevorzugt 0,4 bis 5 Gew% und insbesondere 0,5 bis 3 Gew% bezogen auf den Festkörpergehalt der Wasserbasislacke eingesetzt.

Die erfindungsgemäßen Wasserbasislacke können lackübliche Lösemittel enthalten, beispielsweise in einem Mengenanteil von bevorzugt unter 20 Gew%, besonders bevorzugt unter 15 Gew%.

Es handelt sich um übliche lacktechnische Lösemittel, diese können beispielsweise von der Herstellung der Bindemittel oder der Polycarbonate stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldi-C₁-C₈-alkylether, Dipropylenglykoldi- C₁ - C₈-alkylether, Ethoxypropanol, Butylglykol; Glykole z.B. Ethylenglykol und/oder Propylenglykol, und deren Di- oder Trimere, N- Alkylpyrrolidone, wie z. B. N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte aliphatische C₆ - C₁₂-Kohlenwasserstoffe.

Die erfindungsgemäßen Wasserbasislacke besitzen beispielsweise Festkörpergehalte von 10 bis 50 Gew%, für Effektwasserbasislacke liegt er beispielsweise bevorzugt bei 15 bis 30 Gew%, für unifarbige Wasserbasislacke liegt er bevorzugt höher, beispielsweise bei 20 bis 45 Gew%.

Bei der Berechnung des Verhältnisses von Pigment zu Bindemittel wird die Summe der Gewichtsanteile von farbgebenden Pigmenten, Effektpigmenten und/oder Füllstoffen in Beziehung gesetzt zur Summe der Gewichtsanteile von festem Bindemittel, festem Pastenharz und festem Vernetzer im fertigen Wasserbasislack.

Die erfindungsgemäßen Wasserbasislacke enthalten neben den hyperverzweigten, Polycarbonaten noch mindestens ein Bindemittel (O) und mindestens einen Vernetzer (V). Optional können die Wasserbasislacke darüberhinaus noch weitere Additive (F) enthalten und/oder farb- und/oder effektgebende Pigmente (G).

Die Wasserbasislacke enthalten in geeigneter Weise ionisch oder nicht-ionisch stabilisierte Bindemittelsysteme. Diese sind bevorzugt anionisch und/oder nicht-ionisch stabilisiert.

Anionische Stabilisierung wird bevorzugt erreicht durch zumindest partiell neutralisierte Carboxylgruppen im Bindemittel, während nicht-ionische Stabilisierung bevorzugt durch laterale oder terminale Polyalkylenoxid-, besonders Polyethylenoxideinheiten im Bindemittel erreicht wird.

Die Wasserbasislacke können physikalisch trocknender Natur sein oder unter Ausbildung kovalenter Bindungen vernetzbar sein. Bei den unter Ausbildung kovalenter Bindungen vernetzenden wäßrigen Basislacken kann es sich um selbst- oder fremdvernetzende Systeme handeln. Im letzteren Fall kann es sich um ein- oder mehrkomponentige Wasserbasislacke handeln.

Die erfindungsgemäßen Wasserbasislacke enthalten ein oder mehrere übliche filmbildende Bindemittel. Sie können, falls die Bindemittel nicht selbstvernetzend oder selbsttrocknend sind, gegebenenfalls auch Vernetzer enthalten. Sowohl die Bindemittel- als auch die gegebenenfalls enthaltene Vernetzerkomponente unterliegt keinerlei Beschränkung.

Als filmbildende Bindemittel können beispielsweise übliche Polyester-, Polyurethan- und/oder Poly(meth)acrylatharze verwendet werden. Die Auswahl der gegebenenfalls enthaltenen Vernetzer ist unkritisch, sie richtet sich in dem Fachmann geläufiger Weise nach der Funktionalität der Bindemittel, das heißt die Vernetzer werden so ausgewählt, daß sie eine zur Funktionalität der Bindemittel komplementäre, reaktive Funktionalität aufweisen.

Beispiele für solche komplementäre Funktionalitäten zwischen Bindemittel und Vernetzer sind: Carboxyl/Epoxid, Hydroxyl/Methylolether und/oder Methylol (Methylolether und/oder Methylol bevorzugt als vernetzungswirksame Gruppen von Aminoplastharzen), Hydroxyl/freies Isocyanat, Hydroxyl/blockiertes Isocyanat, (Meth)aryloyl/CH-acide Gruppe. Sofern miteinander verträglich können auch mehrere solcher komplementärer Funktionalitäten in einem Wasserbasislack nebeneinander vorliegen. Die gegebenenfalls in den Wasserbasislacken enthaltenen Vernetzer können einzeln oder im Gemisch vorliegen.

Beispiele geeigneter erfindungsgemäß zu verwendender komplementärer reaktiver funktioneller Gruppen von Bindemittel und Vernetzer sind in der folgenden Übersicht zusammengestellt. In der Übersicht steht die Variable R⁸ für einen acyclischen oder cyclischen aliphatischen, einen aromatischen und/oder einen aromatisch-aliphatischen (araliphatischen) Rest; die Variablen R⁹ und R¹⁰ stehen für gleiche oder verschiedene aliphatische Reste oder sind miteinander zu einem aliphatischen oder heteroaliphatischen Ring verknüpft.

**Übersicht: Beispiele komplementärer reaktiver funktioneller Gruppen**

| Bindemittel | und | Vernetzungsmittel |
|---|---|---|
| Vernetzungsmittel | oder und | Bindemittel |
| -SH | | -C(O)-OH |
| -NH₂ | | -C(O)-O-C(O)- |
| -OH | | -NCO |
| -O-(CO)-NH-(CO)-NH₂ | | -NH-C(O)-OR |
| -O-(CO)-NH₂ | | -CH₂-OH |
| >NH | | -CH₂-O-R⁸ |
| | | -NH-CH₂-O-R⁸ |
| | | -NH-CH₂-OH |
| | | -N(-CH₂-O-R⁸)₂ |
| | | -NH-C(O)-CH(-C(O)OR⁸)₂ |
| | | -NH-C(O)-CH(-C(O)OR⁸)(-C(O)-R⁸) |
| | | -NH-C(O)-NR⁹R¹⁰ |
| | | >Si(OR⁸)₂ |
| | | 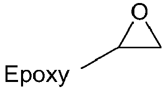 |
| | | 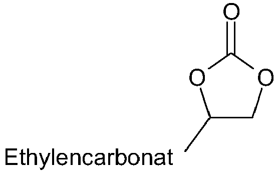 |
| -C(O)-OH | | 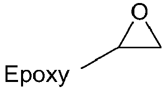 |
| | | -C(O)-N(CH₂-CH₂-OH)₂ |

Komplementäre reaktive funktionelle Gruppen, die für die Verwendung in den erfindungsgemäßen Wasserbasislacken besonders gut geeignet sind, sind
- Carboxylgruppen einerseits und Epoxidgruppen und/oder beta-Hydroxyalkylamidgruppen andererseits sowie
- Hydroxylgruppen einerseits und blockierte und unblockierte Isocyanatgruppen oder Urethan- oder Alkoxymethylaminogruppen andererseits.

Als Bindemittelkomponente (O) kommen beispielsweise, gegebenenfalls gemeinsam mit anderen Hydroxy- oder Aminogruppen aufweisenden Bindemitteln, in Frage Hydroxy(meth)acrylate, Hydroxystyryl(meth)acrylate, linearen oder verzweigten Polyester, Polyether, Polycarbonate, Melaminharze oder Harnstoff-Formaldehydharze, zusammen mit gegenüber Carboxy- und/oder Hydroxyfunktionen reaktiven vernetzenden Verbindungen, beispielsweise mit Isocyanaten, verkappten Isocyanaten, Epoxiden und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten.

Als Bindemittel (O) können beliebige oligomere oder polymere Harze angewandt werden.
Unter Oligomeren werden Harze verstanden, die mindestens 2 bis 15 Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Beispiele für geeignete Bestandteile (O) sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate, vor allem mit Vinylaromaten.

Beispiele geeigneter Polyadditionsharze und/oder Polykondensationsharze sind Polyester, Alkyde, Aminoplaste, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Die Bestandteile (O) können nicht vernetzend oder physikalisch vernetzend thermoplastisch, thermisch selbstvernetzend oder fremdvernetzend sein. Außerdem können sie thermisch und/oder mit aktinischer Strahlung härtbar sein. Die kombinierte Anwendung der thermischen Härtung und der Härtung mit aktinischer Strahlung wird von der Fachwelt auch als Dual-Cure bezeichnet.

Die selbstvernetzenden Bindemittel (O) der thermisch härtbaren Wasserbasislacke und der Dual-Cure-Wasserbasislacke enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind die vorstehend beschriebenen. In diesem Fall sind die Komponenten (O) und (V) in einer Verbindung vereint.

Die Funktionalität der selbst- und/der fremdernetzenden Bestandteile (O) bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle carboxylgruppenhaltiger Bestandteile (O) die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bestandteile (O) liegt die OH-Zahl vorzugsweise bei 15 bis 300, bevorzugt 20 bis 250, besonders bevorzugt 25 bis 200, ganz besonders bevorzugt 30 bis 150 und insbesondere 35 bis 120 mg KOH/g. Oder im Falle epoxidgruppenhaltiger Bestandteile (O) liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

### Beispiele geeigneter olefinisch ungesättigter Monomere mit reaktiven funktionellen Gruppen sind

c1) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, - fumarat oder-itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, - monoethacrylat, -monocrotonat, -monomaleinat, -monofumarat oder-monoitaconat; Umsetzungsprodukte aus cyclischen Estern, wie z.B. epsilon-Caprolacton und diesen Hydroxyalkyl- oder -cycloalkylestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US 3,674,838 A, US 4,126,747 A, US 4,279,833 A oder US 4,340,497 A beschrieben;
c2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
c3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung der bevorzugten (Meth)Acrylatcopolymerisate, insbesondere der glycidylgruppenhaltigen, verwendet.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder -propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, Diaminovaleriansäure, 3,4-Diaminobenzoesäure, 2,4-Diaminotoluolsulfonsäure oder 2,4-Diaminodiphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A, US 4,301,257 A oder US 2,979,514 A bekannt.

Die Bestandteile (O), die mit aktinischer Strahlung oder mit Dual-Cure vernetzbar sind, enthalten im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor-oder Kohlenstoff-Silizium-Einzelbindungen oder -Doppelbindungen. Von diesen sind die Kohlenstoff-KohlenstoffDoppelbindungen besonders vorteilhaft und werden deshalb ganz besonders bevorzugt verwendet. Der Kürze halber werden sie im folgenden als "Doppelbindungen" bezeichnet.

Demnach enthält die bevorzugte Gruppe eine Doppelbindung oder zwei, drei oder vier Doppelbindungen. Werden mehr als eine Doppelbindung verwendet, können die Doppelbindungen konjugiert sein. Es ist von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bestandteile (O) gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können indes auch Gemische aus rein thermisch härtbaren und rein mit aktinischer Strahlung härtbaren Bestandteilen (O) angewandt werden.

Als Bestandteile oder Bindemittel (O) kommen
- all die in den US-Patentschrift US 4,268,542 A1 oder US 5,379,947 A1 und den Patentanmeldungen DE 27 10 421 A1, DE 195 40 977 A1, DE 195 18 392 A1, DE 196 17 086 A1, DE 196 13 547 A1, DE 196 18 657 A1, DE 196 52 813 A1, DE 196 17 086 A1, DE 198 14 471 A1, DE 198 41 842 A1 oder DE 198 41 408 A1, DE 199 08 018 oder DE 199 08 013 oder der europäischen Patentschrift EP 0 652 264 A1 beschriebenen, für die Verwendung in thermisch und/oder mit aktinischer Strahlung härtbaren Klarlack-Slurries vorgesehenen Bindemittel,
- all die in den Patentanmeldungen DE 198 35 296 A1, DE 197 36 083 A1 oder DE 198 41 842 A1 beschriebenen, für die Verwendung in Dual-Cure-Klarlacken vorgesehenen Bindemittel,
- all die in der deutschen Patentanmeldung DE 42 22 194 A1, der ProduktInformation der Firma BASF Lacke + Farben AG, "Pulverlacke", 1990, oder der Firmenschrift von BASF Coatings AG "Pulverlacke, Pulverlacke für industrielle Anwendungen", Januar, 2000 beschriebenen, für die Verwendung in thermisch härtbaren Pulverklarlacken vorgesehenen Bindemittel oder
- all die in den den europäischen Patentanmeldungen EP 0 928 800 A1, 0 636 669 A1, 0 410 242 A1, 0 783 534 A1, 0 650 978 A1, 0 650 979 A1, 0 650 985 A1, 0 540 884 A1, 0 568 967 A1, 0 054 505 A1 oder 0 002 866 A1, den deutschen Patentanmeldungen DE 197 09 467 A1, 42 03 278 A1, 33 16 593 A1, 38 36 370 A1, 24 36 186 A1 oder 20 03 579 B1, den internationalen Patentanmeldungen WO 97/46549 oder 99/14254 oder den amerikanischen Patentschriften US 5,824,373 A, 4,675,234 A, 4,634,602 A, 4,424,252 A, 4,208,313 A, 4,163,810 A, 4,129,488 A, 4,064,161 A oder 3,974,303 A beschriebenen, zur Verwendung in UV-härtbaren Klarlacken und Pulverklarlacken vorgesehenen Bindemittel
in Betracht.

Die Herstellung der Bestandteile (O) weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Weitere Beispiele geeigneter Herstellverfahren für (Meth)Acrylatcopolymerisate (O) werden in den europäischen Patentanmeldungen oder EP 0 767 185 A1, den deutschen Patenten DE 22 14 650 B1 oder DE 27 49 576 B1 und den amerikanischen Patentschriften US 4,091,048 A1, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B1, EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht.

Die Herstellung von Polyestern und Alkydharzen (O) wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethanen (O) wird beispielsweise noch in den Patentanmeldungen EP 0 708 788 A1, DE 44 01 544 A1 oder DE 195 34 361 A1 beschrieben.

Beispiele besonders gut geeigneter Bestandteile (O) sind die epoxidgruppenhaltigen (Meth)Acrylatcopolymerisate, mit einem Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900, einem zahlenmittleren Molekulargewicht (gelpermeationschromatographisch unter Verwendung eines Polystyrolstandards bestimmt) von vorzugsweise 2.000 bis 20.000 und insbesondere 3.000 bis 10.000, und einer Glasübergangstemperatur (T_{G}) von vorzugsweise 30 bis 80, bevorzugt 40 bis 70 und insbesondere 40 bis 60°C (gemessen mit Hilfe der differential scanning calometrie (DSC), wie sie in den Patentschriften und Patentanmeldungen EP 0 299 420 A1, DE 22 14 650 B1, DE 27 49 576 B1, US 4,091,048 A oder US 3,781,379 A beschrieben werden.

Bevorzugte geeignete Vernetzungsmittel (V) sind Polyisocyanate.

Die Polyisocyanate enthalten im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate sind isocyanatgruppenhaltige Polyurethanpräpolymere, die durch Reaktion von Polyolen mit einem Überschuß an Diisocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A1, GB 1220717 A1, DE 16 18 795 A1 oder DE 17 93 785 A1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethylcyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff- Carbodiimid und/oder Uretdiongruppen aufweisende Polyisocyanate verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A1, EP 0 303 150A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.

Weitere Beispiele geeigneter Vernetzungsmittels sind blockierte Polyisocyanate.

Beispiele für geeignete Blockierungsmittel zur Herstellung der blockierten Polyisocyanate sind die aus der US-Patentschrift US 4,444,954 A oder US 5,972,189 A bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Diethylenglykolmonopropylether, Diethylenglykolmonobutylether Propylenglykolmonomethylether, Methoxymethanol, 2-(-Hydroxy-ethoxy)phenol, 2-(Hydroxypropoxy)phenol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie

Gemische dieser Blockierungsmittel, insbesondere Dimethylpyrazol und Triazole, Malonester und Acetessigsäureester, Dimethylpyrazol und Succinimid oder Butyldiglykol und Trimethylolpropan.

Als mehrwertige Isocyanate werden vorzugsweise Mischungen aliphatischer Polyisocyanate mit einer mittleren Funktionalität von 3 bis 6, vorzugsweise 3,5 bis 5, Isocyanatgruppen pro mol eingesetzt. Die Isocyanatmenge wird bevorzugt so gewählt, daß 1,2 bis 3, insbesondere 1,5 bis 2,5, Isocyanatgruppen pro Hydroxylgruppe des (Co)Polymeren zur Reaktion gelangen, die verbleibenden Isocyanatgruppen werden durch Umsetzung mit Aminen in Harnstoffgruppen überführt.

Als Beispiel für besonders geeignete Isocyanatmischungen seien Mischungen von 0,1 bis 10 Gew.-%, vor allem 0,3 bis 8 Gew.-% eines Diisocyanats (z.B. Hexamethylendiisocyanat), 30 bis 80 Gew.-%, vor allem 42 bis 79 Gew.-%, eines Triisocyanats (z.B. trifunktionelles Biuret von Hexamethylendiisocyanat) und 20 bis 60 Gew.-%, vor allem 22 bis 50 Gew.-%, eines Isocyanats mit einer Funktionalität von 4 bis 10 (z.B. ein entsprechendes höherfunktionelles Biuret von Hexamethylendiisocyanat) genannt.

Weitere Beispiele für geeignete Vernetzungsmittel sind alle bekannten aliphatischen und/oder cycloaliphatischen und/oder aromatischen, niedermolekularen, oligomeren und polymeren Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether), oder der Glycidylester der Trimellithsäure oder Trigylcidylisocyanurat (TGIC).

Als Vernetzungsmittel können weiterhin auch Tris(alkoxycarbonylamino)triazine (TACT) eingesetzt werden, in denen die die Alkylreste 1 bis 10 Kohlenstoffatome enthalten.

Beispiele geeigneter Tris(alkoxycarbonylamino)triazine werden in den Patentschriften US 4,939,213 A, US 5,084,541 A oder EP 0 624 577 A1 beschrieben. Insbesondere werden die Tris(methoxy-, Tris(n-butoxy- und/oder Tris(2-ethylhexyloxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Des weiteren sind Aminoplastharze, beispielsweise Melaminharze, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4,710,542 A und EP 0 245 700 B1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Die Aminoplastharze können auch als Bindemittel (O) angewandt werden.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Des weiteren können Carbonsäuren, insbesondere gesättigte, geradkettige, aliphatische Dicarbonsäuren mit 3 bis 20 Kohlenstoffatomen im Molekül, insbesondere Dodecandisäure, verwendet werden.

Weitere Beispiele geeigneter Vernetzungsmittel sind Siloxane, insbesondere Siloxane mit mindestens einer Trialkoxy- oder Dialkoxysilangruppe.

Welche Vernetzungsmittel im einzelnen angewandt werden, richtet sich nach den komplementären reaktiven funktionellen Gruppen, die in den Bindemitteln der Wasserbasislacke enthalten sind.

Die vorliegende Erfindung betrifft ferner die Verwendung der härtbaren Wasserbasislacke für die Automobilerstlackierung, Automobilreparaturlackierung, die Lackierung von Bauwerken im Innen- und Außenbereich, die Lackierung von Türen, Fenstern und Möbeln, die industrielle Lackierung, inklusive Coil Coating, Container Coating und die Imprägnierung und/oder Beschichtung elektrotechnischer Bauteile, sowie die Lackierung von weißer Ware, inklusive Haushaltsgeräte, Heizkessel und Radiatoren.

Insbesondere bevorzugt ist die Verwendung in der Automobilerstlackierung oder Automobilreparaturlackierung, besonders in der Automobilerstlackierung.

In dieser Schrift werden die härtbaren Wasserbasislacke der Kürze halber als "Wasserbasislacke" bezeichnet.

Es handelt sich bei den Wasserbasislacken um härtbare Vorstufen thermoplastischer oder duromerer Kunststoffe, die in flüssiger, gelöster und/oder bevorzugt dispergierter Form auf vorzugsweise metallische Substrate aufgetragen werden. Üblicherweise werden hierzu Beschichtungsanlagen verwendet, wie sie dem Fachmann an sich bekannt sind. Hierbei zeigen sich die beiden grundlegenden Vorteile von Wasserbasislacken, die völlige oder weitgehende Freiheit von organischen Lösemitteln und die leichte Rückführung des Overspray in das Beschichtungsverfahren.

Die härtbaren Wasserbasislacke enthalten neben den Polycarbonaten optional mindestens einen funktionalen Bestandteil (F) eines Wasserbasislacks. Darüber hinaus enthält der Wasserbasislack mindestens einen oligomeren und/oder polymeren Bestandteil (O) als Bindemittel und mindestens einen Vernetzer (V).

Als funktionale Bestandteile (F) kommen alle lacktypischen Bestandteile in Betracht, ausgenommen die unter (O) oder (V) genannten Stoffe sowie die hyperverzweigten Polycarbonate.

Die erfindungsgemäßen Wasserbasislacke können die funktionalem Betstandteil (F) in lacküblichen Mengen, beispielsweise zwischen 0,1 und 5 Gew%, bezogen auf ihren Festkörper, enthalten.

Beispiele geeigneter lacktypischer Bestandteile (F) sind organische und anorganische, transparente oder opake Füllstoffe und/oder Nanopartikel und/oder Hilfs- und/oder Zusatzstoffe wie UV-Absorber, Lichtschutzmittel, Radikalfänger, Entlüftungsmittel, Slipadditive, Polymerisationsinhibitoren, Katalysatoren für die Vernetzung, thermolabile radikalische Initiatoren, Photoinitiatoren, thermisch härtbare Reaktiverdünner, mit aktinischer Strahlung härtbare Reaktivverdünner, Haftvermittler, Verlaufmittel, filmbildende Hilfsmittel, Flammschutzmittel, Korrosionsinhibitoren, Rieselhilfen, Wachse und/oder Mattierungsmittel. Die Bestandteile (F) können einzeln oder als Gemische angewandt werden.

Im Rahmen der vorliegenden Erfindung wird unter aktinischer Strahlung elektromagnetische Strahlung wie nahes Infrarot, sichtbares Licht, UV-Strahlung oder Röntgenstrahlung, insbesondere UV-Strahlung, oder Korpuskularstrahlung wie Elektronenstrahlen verstanden.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den Wasserbasislacken hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid, insbesondere aber Nanopartikel auf dieser Basis.

Als Bestandteile (F) kommen außerdem Hilfs- und/oder Zusatzstoffe wie UV-Absorber, Lichtschutzmittel, Radikalfänger, Entlüftungsmittel, Slipadditive, Polymerisationsinhibitoren, Katalysatoren für die Vernetzung, thermolabile radikalische Initiatoren, Photoinitiatoren, thermisch härtbare Reaktivverdünner, mit aktinischer Strahlung härtbare Reaktivverdünner, Haftvermittler, Verlaufmittel, filmbildende Hilfsmittel, Flammschutzmittel, Korrosionsinhibitoren, Rieselhilfen, Wachse und/oder Mattierungsmittel, die einzeln oder als Gemische angewandt werden können, in Betracht.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den Patentanmeldungen DE 198 09 643 A1, DE 198 40 605 A1 oder DE 198 05 421 A1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Wismutlactat, -citrat, -ethylhexanoat oder-dimethylolpropionat Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden.

Beispiele geeigneter Photoinitiatoren werden in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben.

Beispiele geeigneter Antioxidantien sind Hydrazine und Phosphorverbindungen.

Beispiele geeigneter Lichtschutzmittel sind HALS-Verbindungen, Benztriazole oder Oxalanilide.

Beispiele geeigneter Radikalfänger und Polymerisationsinhibitoren sind organische Phosphite oder 2,6 Di-tert-Butylphenol-Derivate.

### Beispiele geeigneter Entlüftungsmittel sind Diazadicycloundecan oder Benzoin;

Weitere Beispiele für die vorstehend aufgeführten sowie für weitere funktionale Bestandteile (F) werden in dem Lehrbuch »Lackadditive« von Johan Bieleman, Wiley-VCH, Weinheim, New York, 1998, im Detail beschrieben.

Beispiele für solche weitere Additive sind Antischaummittel, Netzmittel, haftvermittelnde Substanzen, Katalysatoren, Verlaufsmittel, Antikratermittel, Lichtschutzmitiel und Verdicker wie beispielsweise synthetische Polymere mit ionischen und/oder assoziativ wirkenden Gruppen wie Polyvinylalkohol, Poly(meth)acrylamid, Poly(meth)acrylsäure, Polyvinylpyrrolidon, hydrophob modifizierte ethoxylierte Polyurethane oder Polyacrylate, vernetzte oder unvernetzte Polymermikroteilchen.
Des weiteren können die erfindungsgemäßen Wasserbasislacke mindestens ein Pigment (G) enthalten, beispielsweise farb- und/oder effektgebende, fluoreszierende, elektrisch leitfähige und/oder magnetisch abschirmende Pigmente, Metallpulver oder lösliche organische Farbstoffe.

Beispiele für farbgebende anorganische oder organische Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Schichtsilikate, Azopigmente, Phthalocyaninpigmente, Chinacridonpigmente, Pyrrolopyrrolpigmente, Perylenpigmente.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer, Graphiteffektpigmente, plättchenförmiges Eisenoxid, plättchenförmige Kupferphthalocyaninpigmente. Die Effektpigmente werden im allgemeinen in Form einer handelsüblichen wäßrigen oder nicht-wäßrigen Paste vorgelegt, gegebenenfalls mit bevorzugt wasserverdünnbaren organischen Lösemitteln und Additiven versetzt und danach mit wäßrigem Bindemittel unter Scheren vermischt. Pulverförmige Effektpigmente können zunächst mit bevorzugt wasserverdünnbaren organischen Lösemitteln und Additiven zu einer Paste verarbeitet werden.

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Geeignete lösliche organische Farbstoffe sind lichtechte organische Farbstoffe mit einer geringen oder nicht vorhandenen Neigung zur Migration aus dem Wasserbasislack und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Das Gewichtsverhältnis von Pigment (G) oder funktionalem Bestandteil (F) (wenn vorhanden) zu Bindemittel im Wasserbasislack beträgt beispielsweise zwischen 0,05 : 1 bis 3 : 1, für Effektwasserbasislacke liegt es beispielsweise bevorzugt bei 0,1 : 1 bis 0,6 : 1, für unifarbige Wasserbasislacke liegt es bevorzugt höher, beispielsweise bei 0,1 : 1 bis 2,5 : 1, jeweils bezogen auf das Festkörpergewicht.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Das Anreiben kann in üblichen, dem Fachmann bekannten Aggregaten erfolgen. Danach wird mit dem restlichen Anteil des wäßrigen Bindemittels oder des wäßrigen Pastenharzes zur fertigen Farbpigmentanreibung komplettiert.

Die Einarbeitung der hochfunktionellen, hoch- oder hyperverzweigten Polycarbonate kann in jedem Stadium der Herstellung der Wasserbasislacke erfolgen, beispielsweise auch erst als Zusatz zum an sich fertigen Wasserbasislack, beispielsweise als nachträglich zugesetztes Korrekturmittel. Eine stabile Einarbeitung der hochfunktionellen, hoch- oder hyperverzweigten Polycarbonate gelingt in der Regel ohne besonderen Aufwand beim Mischvorgang. Gegebenenfalls kann ein Dispergieren erforderlich sein.

Die erfindungsgemäßen Wasserbasislacke eignen sich besonders zum Beschichten von Substraten wie Kunststoffoberflächen, Glas, Keramik, Leder, mineralische Baustoffe, wie Zement-Formsteine und Faserzementplatten und besonders für Holz und MDF, und insbesondere für Metalle und beschichtete Metalle.

Geeignete Substrate für die erfindungsgemäßen Wasserbasislacke sind beispielsweise thermoplastische Polymere, insbesondere Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstryolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP(Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PVC (Polyvinylchloride), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt sind Polyolefine, PMMA und PVC.

Ganz besonders bevorzugt ist ASA, insbesondere gemäß DE 196 51 350 und der Blend ASA/PC. Bevorzugt ist ebenfalls Polymethylmethacrylat (PMMA) oder schlagzähmodifiziertes PMMA.

Ein weiterhin bevorzugtes Substrat zur Beschichtung mit den erfindungsgemäßen Wasserbasislacken sind Metalle, die gegebenenfalls mit einem Primer vorbehandelt sein können.

Bei der Art des Metalls kann es sich im Prinzip um beliebige Metalle handeln. Insbesondere handelt es sich aber um solche Metalle oder Legierungen, welche üblicherweise als metallische Konstruktionswerkstoffe eingesetzt werden, und die vor Korrosion geschützt werden müssen.

Insbesondere handelt es sich um Oberflächen von Eisen, Stahl, Zn, Zn-Legierungen, Al oder AI-Legierungen. Es kann sich dabei um die Oberflächen von vollständig aus den besagten Metallen bzw. Legierungen bestehenden Körpern handeln. Die Körper können aber auch nur mit diesen Metallen beschichtet sein und selbst aus andersartigen Materialien bestehen, beispielsweise aus anderen Metallen, Legierungen, Polymeren oder Verbundwerkstoffen. Es kann sich um Oberflächen von Gußteilen, aus verzinktem Eisen oder Stahl handeln. In einer bevorzugten Ausführungsform der vorliegenden Erfindung handelt es sich um Stahloberflächen.

Zn- oder AI-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al- und Zn in annähernd gleicher Menge vorhanden sind. Mit derartigen Legierungen beschichteter Stahl ist kommerziell erhältlich. Der Stahl kann die üblichen, dem Fachmann bekannten Legierungskomponenten enthalten.

Denkbar ist auch die Anwendung der erfindungsgemäßen Wasserbasislacken zur Behandlung von verzinntem Eisen/Stahl (Weißblech).

Die erfindungsgemäßen Wasserbasislacken eignen sich weiterhin zum Beschichten von Substraten wie Holz, Papier, Textil, Leder, Vlies, Kunststoffoberflächen, Glas, Keramik, mineralischen Baustoffen, wie Zement-Form-steine und Faserzementplatten, oder Metallen oder beschichteten Metallen, bevorzugt von Kunststoffen oder Metallen, insbesondere in Form von Folien, besonders bevorzugt Metallen.

Insbesondere dienen die Wasserbasislacke der Herstellung von Beschichtungen auf Rohren (Pipelines), Drahtwaren aller Art, Flanschen und Armaturen im Innen- und Außenbereich, Wandgarderoben und Bettgestellen, Zaunpfählen, Gartenmöbeln, Leitplanken, Laborausstattungen, Drahtrosten, Einsätzen für Geschirrspülmaschinen, Einkaufskörben, Maschinenteilen, Elektromaschinen, Rotoren, Statoren, Stromspulen, Isolationskästen, Heizkesseln, Bremszylindern, Chemieanlagen oder Straßenschildern.

Zur Beschichtung wird üblicherweise mit den erfindungsgemäßen Wasserbasislacken in an sich bekannter Weise beschichtet, anschließend zur Entfernung von gegebenenfalls vorhandenem Lösungsmittel getrocknet und gehärtet.

Die Beschichtung der Substrate erfolgt nach üblichen, dem Fachmann bekannten Verfahren, wobei man wenigstens einen Wasserbasislack auf das zu beschichtende Substrat in der gewünschten Stärke aufbringt und die flüchtigen Bestandteile entfernt. Dieser Vorgang kann gewünschtenfalls ein- oder mehrfach wiederholt werden. Das Aufbringen auf das Substrat kann in bekannter Weise, z. B. durch Spritzen, Sprühen, Rakeln, Bürsten, Rollen, Walzen und insbesondere durch elektrostatisches Sprühen oder Druckluftspritzen erfolgen. Die Beschichtungsstärke liegt in der Regel in einem Bereich von etwa 3 bis 1000 g/m² und vorzugsweise 10 bis 200 g/m².

Die erfindungsgemäß modifizierten farb- und/oder effektgebenden Wasserbasislacke können bei der Herstellung von Mehrschichtlackierungen, insbesondere dekorativen Basislack/Klarlack-Zweischichtlackierungen, bzw. allgemein bei Mehrschichtlackierungen Verwendung finden.

Die erfindungsgemäßen wäßrigen Basislacke eignen sich zur Herstellung von Mehrschichtlackierungen, insbesondere farb- und/oder effektgebenden Mehrschichtlackierungen, bevorzugt Zweischichtlackierungen auf dem Kraftfahrzeugsektor. Sie sind geeignet für die Fahrzeugerstlackierung und -reparaturlackierung, sie können jedoch auch in anderen Bereichen, z.B. der Kunststofflackierung, insbesondere der Fahrzeugteilelackierung, eingesetzt werden.

Die Erfindung betrifft daher auch ein Verfahren zur Herstellung von Mehrschichtlackierungen, bevorzugt Zweischichtlackierungen durch Auftrag eines erfindungsgemäßen Wasserbasislacks und eines Klarlacks. Die erfindungsgemäßen Wasserbasislacke können dabei auf verschiedenste Arten von Substraten aufgebracht werden. Im allgemeinen handelt es sich um metallische oder Kunststoffuntergründe. Diese sind häufig vorbeschichtet, d.h. Kunststoffsubstrate können z.B. mit einer Kunststoffgrundierung versehen sein, metallische Substrate besitzen im allgemeinen eine beispielsweise elektrophoretisch aufgebrachte Grundierung und gegebenenfalls zusätzlich eine oder mehrere weitere Lackschichten, wie z.B. eine Füllerschicht. Bevorzugt werden die erfindungsgemäßen Wasserbasislacke durch Spritzen in einer Trockenschichtdicke von 8 bis 50 µm appliziert, für Effektwasserbasislacke liegt die Trockenschichtdicke beispielsweise bevorzugt bei 10 bis 25 µm, für unifarbige Wasserbasislacke liegt sie bevorzugt höher, beispielsweise bei 10 bis 40 µm.

Die Applikation erfolgt bevorzugt im Naß-in- Naß-Verfahren, d.h.nach einer Ablüftphase, z.B. bei 20 bis 60 °C, werden die Wasserbasislackschichten mit einem üblichen Klarlack in einer Trockenschichtdicke von bevorzugt 30 bis 60 µm überlackiert und gemeinsam mit diesem bei Temperaturen von beispielsweise 20 bis 150°C getrocknet oder vernetzt. Die Trocknungsbedingungen der Mehrschichtlackierung aus Wasserbasislack und Klarlack richten sich nach dem verwendeten Klarlacksystem. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Die im Stand der Technik manchmal beobachtete Bildung eines hauchartigen, milchigen Belags auf der Klarlackoberfiäche kann bei Verwendung der erfindungsgemäßen Wasserbasislacke hergestellten Mehrschichtlackierungen auch im Falle dunkler Farbtöne nicht beobachtet werden.

Als Klarlack sind grundsätzlich alle bekannten Klarlacke oder transparent pigmentierten Überzugsmittel geeignet. Hierbei können sowohl lösungsmittelhaltige Einkomponenten (1 K)- oder Zweikomponenten(2K)-Klarlacke, wasserverdünnbare 1 K- oder 2K-Klarlacke, Pulverklarlacke oder wäßrige Pulverklarlackslurries eingesetzt werden. Bevorzugt werden 2K-Polyurethanklarlacke zur Überlackierung aus erfindungsgemäßen Wasserbasislacken erstellter Basislackschichten eingesetzt. Durch die erfindungsgemäße Verwendung der hochfunktionellen, hoch- oder hyperverzweigten Polycarbonaten in an sich bekannten farb- und/oder effektgebenden wasserbasislacken kann insbesondere Benetzungsgrenze deutlich herabgesetzt werden.

Die vorliegende Erfindung soll anhand der nachfolgenden Beispiele näher erläutert werden.

### Hyperverzweigte Polycarbonate:

### Allgemeine Arbeitsvorschrift:

Als mehrfunktionelle Polyole wurden Ethoxylate oder Propoxylate auf Basis von Trimethylolpropan (TMP) oder Glycerin (Glyc) als Startermolekül eingesetzt, deren Zusammensetzungen im statistischen Mittel um die in Tabelle 1 angegebenen Werte zum Pfropfungsgrad mit Ethylenoxid (EO) oder Propylenoxid (PO) schwankten.
Das mehrfunktionelle Polyol, Diethylcarbonat und Kaliumcarbonat oder Kaliumhydroxid als Katalysator (Menge bezogen auf Menge Polyol in Gew. ppm) wurden nach den Ansatzmengen gemäß Tabelle 1 in einem Dreihalskolben, ausgestattet mit Rührer, Rückflusskühler und Innenthermometer vorgelegt, die Mischung auf 140°C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Ethanols. Nun wurde der Rückflusskühler gegen einen absteigenden Kühler getauscht, bezogen auf die Äquivalentmenge Katalysator ein Äquivalent Phosphorsäure zugegeben, Ethanol abdestilliert und die Temperatur des Reaktionsgemisches langsam bis auf 160°C erhöht. Der abdestillierte Alkohol wurde in einem gekühlten Rundkolben gesammelt, ausgewogen und der Umsatz so gegenüber dem theoretisch möglichen Vollumsatz prozentual ermittelt (siehe Tabelle 1). Anschließend wurde bei 160°C über einen Zeitraum von 1 h trockener Stickstoff durch das Reaktionsgemisch geleitet, um noch vorhandene Restmengen von Monomeren zu entfernen. Danach wurde das Reaktionsgemisch auf Raumtemperatur abgekühlt.

Die Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt.

**Tabelle 1: Polycarbonate, Einsatzstoffe und Endprodukte**

| Bsp. Nr. | Polyol | Molverhältnis Polyol : Diethylcarbonat | Katalysator, Gew. ppm bezogen auf Menge Polyol | Destillat, Ethanolmenge bez. auf Vollumsatz Mol% | Molekulargewichte GPC (g/mol) Mw Mn |
|---|---|---|---|---|---|
| 1 | TMP x 3 EO | 1:1 | K₂CO₃ 150 | 66 | 2000 1170 |
| 2 | TMP x 3 EO | 1:1 | K₂CO₃ 150 | 95 | 10300 2300 |
| 3 | TMP x 3 EO | 1:1,1 | K₂CO₃ 150 | 93 | 23600 2700 |
| 4 | TMP x 12 EO | 1:1 | KOH 200 | 90 | 25600 3900 |
| 5 | TMP x 12 EO | 1:1 | KOH 150 | 80 | 6800 2700 |
| 6 | TMP x 5,4 PO | 1:1 | KOH 200 | 85 | 4000 1700 |
| 7 | TMP x 5,4 PO | 1:1,3 | KOH 100 | 81 | 23300 2700 |
| 8 | TMP x 1,2 PO | 1:1 | K₂CO₃ 150 | 70 | 1400 850 |
| 9 | Glyc x 5 EO | 1:1 | K₂CO₃ 150 | 93 | 8800 2400 |

### Anwendungsbeispiele:

### Einsatz der erfindungsgemäßen Polycarbonate in Wasserbasislack:

### Beispiel 10

Das kommerzielle Produkt Black Magic® wurde einer Prüfung unterzogen, mit der die Benetzungsgrenze des Klarlacks (KL) auf dem Basislacks in Abhängigkeit von der Schichtdicke des Klarlacks ermittelt wird.

Eine Abmischung dieses kommerziellen Produktes mit 0,5% des Polycarbonats (PC) aus Beispiel 5 (Tabelle 1) wurde ebenfalls dieser Prüfung unterzogen.

Folgende Ergebnisse wurden erhalten:

| | |
|---|---|
| Benetzungsgrenze für Black Magic®: | 21 µm KL-Schichtdicke |
| Benetzungsgrenze für Black Magic® + 0,5% PC | 13µm KL-Schichtdicke |

### Beispiel 11

Das kommerzielle Produkt Sunset Red® wurde einer Prüfung unterzogen, mit der die Benetzungsgrenze des Klarlacks auf dem Basislacks in Abhängigkeit von der Schichtdicke des Klarlacks ermittelt wird.

Eine Abmischung dieses kommerziellen Produktes mit 0,5% des Polycarbonats (PC) aus Beispiel 5 (Tabelle 1) wurde ebenfalls dieser Prüfung unterzogen.

Folgende Ergebnisse wurden erhalten:

| | |
|---|---|
| Benetzungsgrenze für Sunset Red®: | 17µm KL-Schichtdicke |
| Benetzungsgrenze für Sunset Red® + 0,5% PC: | 14µm KL-Schichtdicke |

## Patentansprüche

1. Verwendung von mindestens einem hochfunktionellen, hoch- oder hyperverzweigten, unvernetzten Polycarbonat als Additiv in Mehrschichtlackierungen, aufgebaut aus einem Wasserbasislack und einem Klarlack, worin der Wasserbasislack das mindestens eine hochfunktionelle, hoch- oder hyperverzweigte, unvernetzte Polycarbonat enthält.

2. Verwendung von hochfunktionellen, hoch- oder hyperverzweigten, unvernetzten Polycarbonaten zur Verringerung der Benetzungsgrenze bei der Mehrschichtlackierung mit Wasserbasislack und Klarlack gemäß Anspruch 1.

3. Verwendung gemäß Anspruch 1 oder 2, **dadurch gekennzeichnet, daß** der Anteil des Polycarbonats im Wasserbasislack 0,1 bis 15 Gew% beträgt.

4. Verwendung gemäß einem der vorstehenden Ansprüche, worin der Wasserbasislack ein oder mehrere Bindemittel und gegebenenfalls Pigmente sowie gegebenenfalls Füllstoffe, Vernetzer, organische Lösemittel und/oder lackübliche Additive enthält.

5. Verwendung gemäß einem der vorstehenden Ansprüche, **dadurch gekennzeichnet, dass** das Polycarbonat im Wasserbasislack durch ein Verfahren erhalten wird, umfassend die Schritte:
a) Herstellung eines oder mehrerer Kondensationsprodukte (K) entweder durch
a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B1), welcher mindestens 3 OH-Gruppen aufweist, unter Eliminierung von Alkoholen ROH, wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes, bevorzugt eines fünf- bis sechsgliedrigen Ringes miteinander verbunden sein können, und n eine ganze Zahl von 1 bis 5 darstellt
oder
a2) Umsetzung von Phosgen, Diphosgen oder Triphosgen mit dem besagten aliphatischen, aliphatisch/aromatischen oder aromatischen Alkohol (B1) unter Freisetzung von Chlorwasserstoff,
und
b) intermolekulare Umsetzung der Kondensationsprodukte (K) zu einem hochfunktionellen, hoch- oder hyperverzweigten Polycarbonat,
wobei das Mengenverhältnis der OH-Gruppen zu den Phosgenen oder den Carbonaten im Reaktionsgemisch so gewählt wird, dass die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen.

6. Verwendung gemäß Anspruch 5, **dadurch gekennzeichnet, daß** der Alkohol (B1) mit ein bis 30 Molekülen Ethylenoxid und/oder Propylenoxid und/oder iso-Butylenoxid pro Hydroxygruppe umgesetzt ist.

7. Verwendung gemäß Anspruch 5 oder 6, **dadurch gekennzeichnet, daß** der Alkohol (B1) ausgewählt ist aus der Gruppe bestehend aus Glycerin, Trimethylolethan, Trimethylolpropan, 1,2,4-Butantriol und Pentaerythrit.

8. Verwendung gemäß einem der vorstehenden Ansprüche, **dadurch gekennzeichnet, daß** man das Polycarbonat zumindest teilweise mit mindestens einem monofunktionellen Polyalkylenoxidpolyetheralkohol umsetzt.

9. Verwendung gemäß einem der vorstehenden Ansprüche, **dadurch gekennzeichnet, daß** der Wasserbasislack einen Festkörpergehalt von 10 bis 50 Gew% aufweist

10. Verwendung gemäß einem der Ansprüche 1 bis 9 in der Automobilerstlackierung, Automobilreparaturlackierung, Lackierung von Bauwerken im Innen- und Außenbereich, Lackierung von Türen, Fenstern und Möbeln, industriellen Lackierung, Coil Coating, Container Coating und Imprägnierung und/oder Beschichtung elektrotechnischer Bauteile, Lackierung von weißer Ware, inklusive Haushaltsgeräte, Heizkesseln, Radiatoren, Rohren (Pipelines), Drahtwaren, Flanschen und Armaturen, Wandgarderoben, Bettgestellen, Zaunpfählen, Gartenmöbeln, Leitplanken, Laborausstattungen, Drahtrosten, Einsätzen für Geschirrspülmaschinen, Einkaufskörben, Maschinenteilen, Elektromaschinen, Rotoren, Statoren, Stromspulen, Isolationskästen, Heizkesseln, Bremszylindern, Chemieanlagen oder Straßenschildern.

11. Verwendung gemäß einem der Ansprüche 1 bis 9 in der Beschichtung von Kunststoff, Glas, Keramik, Leder, mineralischen Baustoffen, Zement-Formsteinen, Faserzementplatten, Holz, MDF, Metallen und beschichteten Metallen.

12. Verfahren zur Herstellung von Mehrschichtlackierungen, **dadurch gekennzeichnet, daß** man einen Wasserbasislack, enthaltend mindestens ein hochfunktionelles, hoch- oder hyperverzweigtes, unvernetztes Polycarbonat, auf ein Substrat aufbringt, bei 20 bis 60 °C ablüftet, anschließend mit einem Klarlack überlackiert und gemeinsam mit diesem trocknet oder vernetzt.

13. Verfahren gemäß Anspruch 12, **dadurch gekennzeichnet, daß** die Trockenschichtdicke des Wasserbasislackes von 8 bis 50 µm beträgt.

14. Verfahren gemäß Anspruch 12 oder 13, **dadurch gekennzeichnet, daß** die Trockenschichtdicke des Klarlackes von 30 bis 60 µm beträgt.

## Claims

1. The use of at least one high-functionality, highly branched or hyperbranched, uncrosslinked polycarbonate as additive in multicoat finishes, composed of an aqueous basecoat material and a clearcoat material, in which the aqueous basecoat material comprises the at least one high-functionality highly branched or hyperbranched, uncrosslinked polycarbonate.

2. The use of high-functionality, highly branched or hyperbranched, uncrosslinked polycarbonates for reducing the wetting limit in the context of multicoat finishing with aqueous basecoat material and clearcoat material according to claim 1.

3. The use according to claim 1 or 2, wherein the fraction of the polycarbonate in the aqueous basecoat material is 0.1% to 15% by weight.

4. The use according to any one of the preceding claims, in which the aqueous basecoat material comprises one or more binders and, optionally, pigments and also, optionally, fillers, crosslinkers, organic solvents and/or typical coating additives.

5. The use according to any one of the preceding claims, wherein the polycarbonate in the aqueous basecoat material is obtained by a process comprising the steps of:
a) preparing one or more condensation products (K) by either
a1) reacting at least one organic carbonate (A) of general formula RO[(CO)O]ₙR with at least one aliphatic, aliphatic/aromatic or aromatic alcohol (B1) containing at least 3 OH groups, with elimination of alcohols ROH, R, independently at each occurrence, being a straight-chain or branched aliphatic, aromatic/aliphatic or aromatic hydrocarbon radical having 1 to 20 carbon atoms, and it also being possible for the radicals R to be joined to one another to form a ring, preferably a five- to six-membered ring and n being an integer from 1 to 5
or
a2) reacting phosgene, diphosgene or triphosgene with said aliphatic, aliphatic/aromatic or aromatic alcohol (B1), with release of hydrogen chloride,
and
b) intermolecularly reacting the condensation products (K) to give a high-functionality, highly branched or hyperbranched polycarbonate,
the proportion of the OH groups to the phosgenes or the carbonates in the reaction mixture being chosen such that the condensation products (K) contain on average either one carbonate or carbamoyl chloride group and more than one OH group, or one OH group and more than one carbonate or carbamoyl chloride group.

6. The use according to claim 5, wherein the alcohol (B1) is reacted with one to 30 molecules of ethylene oxide and/or propylene oxide and/or isobutylene oxide per hydroxyl group.

7. The use according to claim 5 or 6, wherein the alcohol (B1) is selected from the group consisting of glycerol, trimethylolethane, trimethylolpropane, 1,2,4-butanetriol and pentaerythritol.

8. The use according to any one of the preceding claims, wherein the polycarbonate is at least partly reacted with at least one monofunctional polyalkylene oxide polyether alcohol.

9. The use according to any one of the preceding claims, wherein the aqueous basecoat material has a solids content of 10% to 50% by weight.

10. The use according to any one of claims 1 to 9 in automotive OEM finishing, automotive refinish, the painting of built structures, both interiors and exteriors, painting of doors, windows, and furniture, industrial coating, coil coating, container coating, and the impregnation and/or coating of electrical components, coating of white goods, including household appliances, boilers, radiators, pipes (pipelines), wire goods, flanges and fittings, wall-mounted wardrobes, bedframes, fence posts, garden furniture, traffic barriers, laboratory equipment, wire gratings, inserts for dishwashers, shopping baskets, machinery components, electrical machinery, rotors, stators, electrical coils, insulation boxes, boilers, brake cylinders, chemical plant or roadsigns.

11. The use according to any one of claims 1 to 9 in coating plastic, glass, ceramic, leather, mineral building materials, cement moldings, fiber cement slabs, wood, MDF, and metals, including coated metals.

12. A process for producing multicoat finishes, wherein an aqueous basecoat material comprising at least one high-functionality, highly branched or hyperbranched, uncrosslinked polycarbonate is applied to a substrate, flashed off at 20 to 60°C, then overcoated with a clearcoat material, and dried or crosslinked together with the clearcoat material.

13. The process according to claim 12, wherein the dry film thickness of the aqueous basecoat material is from 8 to 50 µm.

14. The process according to claim 12 or 13, wherein the dry film thickness of the clearcoat material is from 30 to 60 µm.

## Revendications

1. Utilisation d'au moins un polycarbonate hautement fonctionnel, hautement ou hyperramifié, non réticulé, en tant qu'additif dans des vernissages multicouches, constitués par un vernis de base aqueux et un vernis transparent, le vernis de base aqueux contenant ledit au moins un polycarbonate hautement fonctionnel, hautement ou hyperramifié, non réticulé.

2. Utilisation de polycarbonates hautement fonctionnels, hautement ou hyperramifiés, non réticulés, pour réduire la limite de mouillage dans un vernissage multicouche avec un vernis de base aqueux et un vernis transparent selon la revendication 1.

3. Utilisation selon la revendication 1 ou 2, **caractérisée en ce que** la proportion du polycarbonate dans le vernis de base aqueux est de 0,1 à 15 % en poids.

4. Utilisation selon l'une quelconque des revendications précédentes, dans laquelle le vernis de base aqueux contient un ou plusieurs liants et éventuellement des pigments, ainsi qu'éventuellement des charges, des agents de réticulation, des solvants organiques et/ou des additifs usuels pour les laques.

5. Utilisation selon l'une quelconque des revendications précédentes, **caractérisée en ce que** le polycarbonate dans le vernis de base aqueux est obtenu par un procédé comprenant les étapes suivantes :
a) la fabrication d'un ou de plusieurs produits de condensation (K), par
a1) la mise en réaction d'au moins un carbonate organique (A) de formule générale RO[(CO)O]ₙR avec au moins un alcool aliphatique, aliphatique/aromatique ou aromatique (B1), qui comprend au moins 3 groupes OH, avec élimination d'alcools ROH, les R étant à chaque fois indépendamment les uns des autres un radical hydrocarboné linéaire ou ramifié, aliphatique, aromatique/aliphatique ou aromatique, contenant 1 à 20 atomes C, et les radicaux R pouvant également être reliés les uns avec les autres avec formation d'un cycle, de préférence d'un cycle de cinq à six éléments, et n représentant un nombre entier de 1 à 5,
ou
a2) la mise en réaction de phosgène, de diphosgène ou de triphosgène avec ledit alcool aliphatique, aliphatique/aromatique ou aromatique (B1) avec libération de chlorure d'hydrogène,
et
b) la mise en réaction intermoléculaire des produits de condensation (K) pour former un polycarbonate hautement fonctionnel, hautement ou hyperramifié,
le rapport de quantités entre les groupes OH et les phosgènes ou les carbonates dans le mélange réactionnel étant choisi de sorte que les produits de condensation (K) comprennent en moyenne un groupe carbonate ou chlorure de carbamoyle et plus d'un groupe OH ou un groupe OH et plus d'un groupe carbonate ou chlorure de carbamoyle.

6. Utilisation selon la revendication 5, **caractérisée en ce que** l'alcool (B1) est mis en réaction avec une à 30 molécules d'oxyde d'éthylène et/ou d'oxyde de propylène et/ou d'oxyde d'isobutylène par groupe hydroxy.

7. Utilisation selon la revendication 5 ou 6, **caractérisée en ce que** l'alcool (B1) est choisi dans le groupe constitué par la glycérine, le triméthyloléthane, le triméthylolpropane, le 1,2,4-butanetriol et la pentaérythrite.

8. Utilisation selon l'une quelconque des revendications précédentes, **caractérisée en ce que** le polycarbonate est au moins partiellement mis en réaction avec au moins un oxyde de polyalkylène-polyéther-alcool monofonctionnel.

9. Utilisation selon l'une quelconque des revendications précédentes, **caractérisée en ce que** le vernis de base aqueux présente une teneur en solides de 10 à 50 % en poids.

10. Utilisation selon l'une quelconque des revendications 1 à 9 dans le premier vernissage d'automobiles, le vernissage de réparation d'automobiles, le vernissage d'ouvrages dans le domaine intérieur et extérieur, le vernissage de portes, de fenêtres et de meubles, le vernissage industriel, le laquage en continu, le laquage de contenants et l'imprégnation et/ou le revêtement de composants électrotechniques, le vernissage de produits blancs, y compris d'appareils ménagers, de chaudières, de radiateurs, de tubes (canalisations), d'articles en fils, de brides et d'armatures, de portemanteaux, de cadres de lits, de piquets, de meubles de jardin, de glissières de sécurité, d'équipement de laboratoire, de grillages, d'inserts pour lave-vaisselle, de paniers alimentaires, de parties de machine, de machines électriques, de rotors, de stators, de bobines d'intensité, de boîtes d'isolation, de chaudières, de cylindres de frein, d'unités chimiques ou de panneaux indicateurs.

11. Utilisation selon l'une quelconque des revendications 1 à 9 dans le revêtement de plastique, de verre, de céramique, de cuir, de matériaux de construction minéraux, de briques en ciment, de plaques en fibrociment, de bois, de MDF, de métaux et de métaux revêtus.

12. Procédé de fabrication de vernissages multicouches, **caractérisé en ce qu'**un vernis de base aqueux, contenant au moins un polycarbonate hautement fonctionnel, hautement ou hyperramifié, non réticulé, est appliqué sur un substrat, ventilé à une température de 20 à 60 °C, puis sur-vernis avec un vernis transparent, et séché ou réticulé conjointement avec celui-ci.

13. Procédé selon la revendication 12, **caractérisé en ce que** l'épaisseur de couche sèche du vernis de base aqueux est de 8 à 50 µm.

14. Procédé selon la revendication 12 ou 13, **caractérisé en ce que** l'épaisseur de couche sèche du vernis transparent est de 30 à 60 µm.
